# EUROPEAN PATENT APPLICATION

(11) **EP 2 687 843 A1**
(43) Date of publication of application: **22.01.2014**
(21) Application number: 13174173.8
(22) Date of filing: 27.06.2013
(51) Int. Cl.: G01N 29/12, G01N 29/44

(54) **Non-destructive evaluation methods for machine-riveted bearings**

(30) Priority: 17.07.2012 US 201213551065
(71) Applicant: Honeywell International Inc., Morristown, NJ 07962-2245 (US)
(72) Inventor: Singh, Surendra, Morristown, NJ 07962-2245 (US); Bridges, Eric, Morristown, NJ 07962-2245 (US); Restivo, Anthony, Morristown, NJ 07962-2245 (US)
(74) Representative: Houghton, Mark Phillip

(57) **Abstract**

The disclosed embodiments generally relate to non-destructive evaluation methods. In an embodiment, a method for non-destructive evaluation of a machine-riveted bearing includes positioning a first plurality of sensors in the region of interest, the first plurality of acoustic sensors being provided in a phased array, positioning a second plurality of sensors in the region of interest, the second plurality of sensors being provided in a phased array, inducing a vibration in the region of interest using the first plurality of sensors and receiving a resonance frequency spectra using the second plurality of sensors, and comparing the received resonance frequency spectra against a reference spectra to determine the presence of an anomaly in the region of interest.

## Description

### TECHNICAL FIELD

The disclosed embodiments generally relate to non-destructive evaluation (NDE) methods. More particularly, the disclosed embodiments relate to NDE methods for the evaluation of machine-riveted bearings.

### BACKGROUND

Non-Destructive Evaluation (NDE) methods refer to a class of methods that can be used to inspect objects for defects. NDE methods are often used to inspect materials for defects, such as structural anomalies, inclusions, cracks, etc. However, many conventional NDE methods often provide incomplete or otherwise inadequate inspections. This is especially true in difficult geometries, such as in machine-riveted bearings.

Rolling element ball bearings typically employ riveting to join the two halves of the separator element of the bearing together. For example, riveting is required to facilitate assembly of a Conrad ball bearing, in which the balls ride in raceway grooves in the inner and outer ring. In order to assemble the bearing, the balls are installed between the inner and outer rings, distributed evenly around the circumference, and then the two halves of the separator are brought together and joined, typically using rivets.

The quality of the riveting process is an important to the reliability of the bearing. If the riveting is done incorrectly, the two halves of the separator are not brought into firm contact, and the halves are not properly clamped together in the assembly. This could potentially result in premature fatigue failure of the rivets, allowing the halves to disassemble during operation, resulting in premature failure of the bearing.

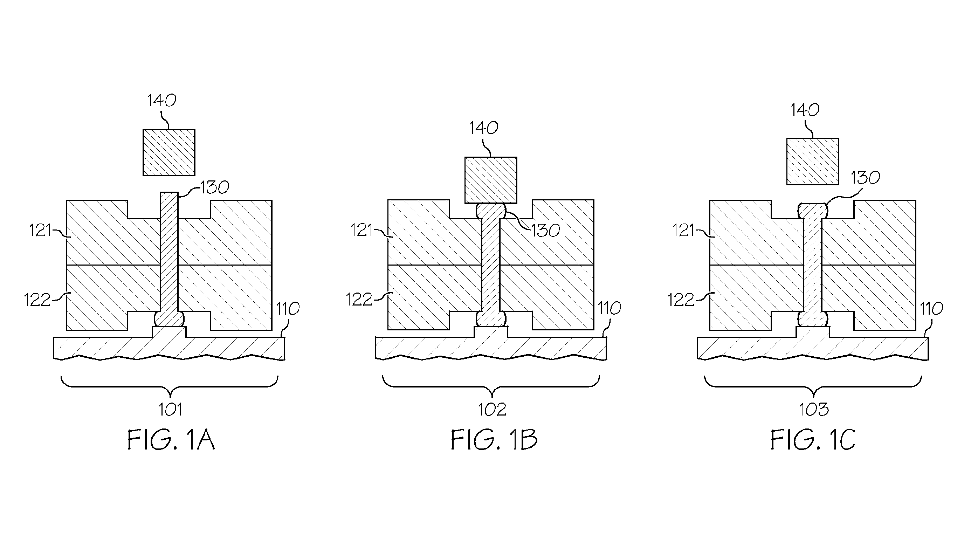

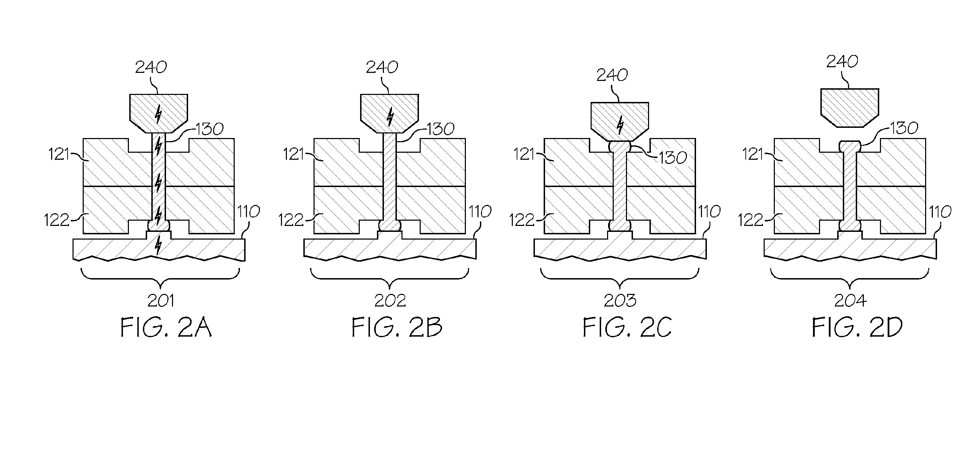

Currently, two riveting processes, cold-forming and hot-upset forming, are used for joining the two halves of the separator together. The rivet materials include AISI (American Iron and Steel Institute) 1010 carbon steel, and the two separator halves are typically made from steel or bronze. FIGS. 1 and 2 show schematic illustration for a cold-form forming and hot-upset forming riveting procedure, respectively. As illustrated in FIG. 1, the cold-forming procedure begins at step 101 with a rivet 130 being inserted between two separator halves 121, 122. The rivet is supported at its lower end by a support platform 110. A head-forming die 140 is positioned above the rivet 130. Thereafter, at step 102, the head-forming die 140 is brought into contact with the upper end of the rivet 130, and compresses the rivet 130 to tightly hold the two separator halves 121, 122 together. At step 103, the head-forming die 140 is withdrawn from the rivet 130, leaving the machine-riveted component on the platform 110.

As illustrated in FIG. 2, the hot-upset forming procedure begins at step 201 with a rivet 130 being inserted between two separator halves 121, 122. The rivet is supported at its lower end by a support platform 110. An electrode head-forming die 240 is positioned above the rivet 130. Thereafter, at step 202, the electrode head-forming die 240 is brought into abutting, but not compressive contact with the rivet 130. An electrical current flows to the rivet 130, thereby heating the rivet 130, from the electrode head-forming die 240. Thereafter, at step 203, the electrode head-forming die 240 lowers further to compress the hot rivet 130 to tightly hold the two separator halves 121, 122 together. At step 204, the electrode head-forming die 240 is withdrawn from the rivet 130, leaving the machine-riveted component on the platform 110.

It has been determined that an important attribute of properly installed rivets is that the processes result in a residual "clamp" force between the two assembled parts. This clamp force holds the two halves of the separator together and resists relative motion of the two halves, by virtue of a high-frictional force on the clamped faces. Improperly installed rivets do not impart a clamp force between the separator halves, allowing relative motion between the separator halves under the influence of vibration and ball forces on the separator pockets. These vibration and ball forces impart fatigue cyclic loading on the rivets, resulting in premature failure.

Current quality inspection of machine-riveted bearings is primarily visual. Visual inspection is subjective, time-consuming, and only capable of detecting surface anomalies. Visual inspection does not detect any subsurface or volumetric structural discontinuities, and is therefore not particularly well suited for monitoring riveting manufacturing processes. Currently there is currently no non-destructive testing method available to assess the quality of the rivet installation in terms of the clamp load imparted on the two separator halves.

It would therefore be desirable to provide NDE methods for use with machine-riveted bearings. It would further be desirable to provide NDE methods that can be used by the manufacturer of the bearing for monitoring and auditing the riveting processes and for inspecting quality in the finished bearing parts, and further can be used by the end user of the bearing to substantiate the manufacturer's ability to meet the requirements for proper bearing separator riveting. Furthermore, other desirable features and characteristics of the present invention will become apparent from the subsequent detailed description of the invention and the appended claims, taken in conjunction with the accompanying drawings and this background of the invention.

### BRIEF SUMMARY

The disclosed embodiments relate to non-destructive evaluation (NDE) methods for evaluating a machine-riveted bearing. In one embodiment, a method for non-destructive evaluation of a machine-riveted bearing includes identifying a region of interest on the machine-riveted bearing, positioning a plurality of acoustic sensors in the region of interest, the plurality of acoustic sensors being provided in a phased array, inducing a vibration in the region of interest using the plurality of acoustic sensors and receiving a resonance frequency spectra using the plurality of acoustic sensors, and comparing the received resonance frequency spectra against a reference spectra to determine the presence of an anomaly in the region of interest.

In another embodiment, a method for non-destructive evaluation of a machine-riveted bearing includes identifying a region of interest on the machine-riveted bearing, positioning a plurality of acoustic sensors in the region of interest, the plurality of acoustic sensors being provided in a phased array, and positioning a plurality of optical sensors in the region of interest, the plurality of optical sensors being provided in a phased array. The method further includes inducing a vibration in the region of interest using the plurality of acoustic sensors and receiving a resonance frequency spectra using the plurality of optical sensors, and comparing the received resonance frequency spectra against a reference spectra to determine the presence of an anomaly in the region of interest.

In yet another embodiment, a method for non-destructive evaluation of a machine-riveted bearing includes positioning a first plurality of sensors in the region of interest, the first plurality of acoustic sensors being provided in a phased array, positioning a second plurality of sensors in the region of interest, the second plurality of sensors being provided in a phased array, inducing a vibration in the region of interest using the first plurality of sensors and receiving a resonance frequency spectra using the second plurality of sensors, and comparing the received resonance frequency spectra against a reference spectra to determine the presence of an anomaly in the region of interest.

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

### BRIEF DESCRIPTION OF THE DRAWINGS

The present invention will hereinafter be described in conjunction with the following drawing figures, wherein like numerals denote like elements, and wherein:

FIG. 1 illustrates the riveting of a separator element of a bearing using cold-forming techniques;

FIG. 2 illustrates the riveting of a separator element of a bearing using hot-upset forming;

FIG. 3 illustrates a conceptual testing acoustic sensor arrangement on a region of interest in accordance with an embodiment of the present disclosure;

FIG. 4 shows a typical resonance spectrum obtained from two groups of riveted bearing assemblies;

FIG. 5 illustrates a conceptual phased array of acoustic sensors arranged over a region of interest in accordance with an embodiment of the present disclosure;

FIG. 6 is a flowchart of an exemplary method for non-destructive evaluation of machine-riveted bearings in accordance with the present disclosure; and

FIGS. 7-10 illustrate exemplary embodiments for identifying and testing regions of interest in a riveted bearing.

### DETAILED DESCRIPTION

The following detailed description is merely exemplary in nature and is not intended to limit the invention or the application and uses of the invention. As used herein, the word "exemplary" means "serving as an example, instance, or illustration." Any embodiment described herein as "exemplary" is not necessarily to be construed as preferred or advantageous over other embodiments. Furthermore, there is no intention to be bound by any theory presented in the preceding background or the following detailed description.

The embodiments described herein relate generally to non-destructive evaluation of machine-riveted bearings. A machine-riveted assembly is a mechanical assembly whose performance and structural integrity depends largely on structural integrity of individual components thereof as well as on the assembled part as a whole. The elastic properties of the riveted parts will depend on the elastic properties of each component as well as on the process used in riveting, i.e., hot-upset or cold-forming, as noted above.

The embodiments described herein are based on the fundamental principle of physics that a hard element will resonate at a specific frequency. As such, it has been discovered that it is possible to use specialized sensors in various configurations and combinations with other sensing devices, for example an optical interferometer, as will be described in greater detail below, for studying the riveted bearing assembly. Further, it has been shown that the structural integrity of the riveted bearing assembly is preferably studied by examining it under vibratory loads. As such, the present disclosure describes a non-destructive test method to evaluate each specific area using induced vibration within the bearing assembly and to provide information related to local as well as bulk changes in microstructure and structural integrity.

Embodiments of the present disclosure are further based on the principle that an assembly with tight joints, nominal dimensions, good microstructure, and elastic properties will show a markedly different response to induced vibration than an assembly with loose joints and different alloying and heat treatment in which internal damping and additional resonances are present. Lack of tight joints, widening dimensions between joined components, cracks or other defects in microstructure, and inelastic properties or brittleness are all indicative of an assembly that could be prone to failure. It is thus an object of the present disclosure to identify such assemblies using non-destructive evaluation techniques.

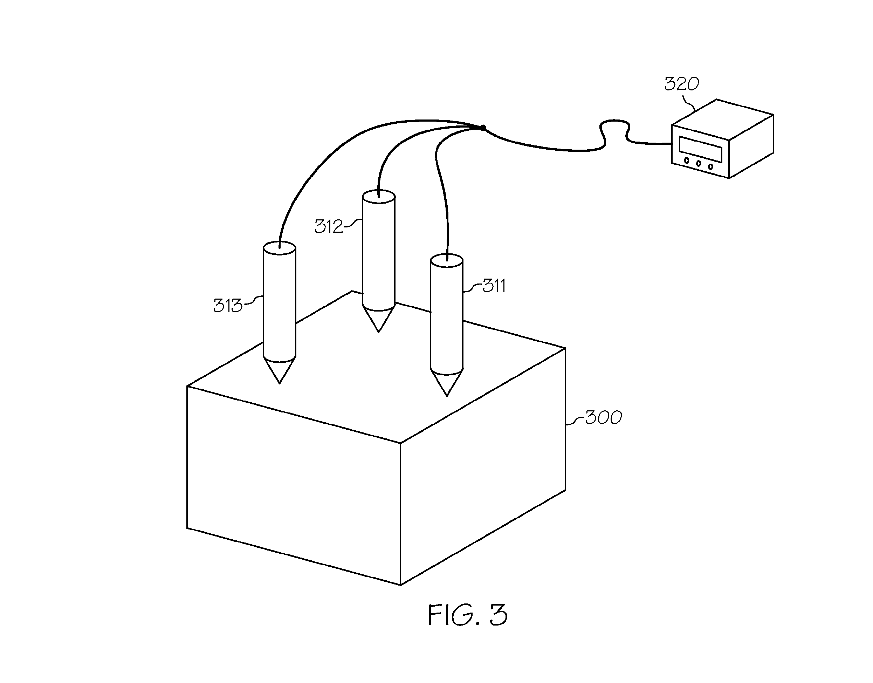

In accordance with the present disclosure, a plurality of acoustic sensors are brought into contact with the region of interest (ROI) on the bearing assembly to be testing. A first of the plurality of acoustic sensors subjects the bearing assembly to external sinusoidal waves varying in frequency. At least two other acoustic sensors of the plurality of acoustic sensors receive different vibrational response modes as the signals pass through the bearing assembly and are received by the at least two receiving sensors. FIG. 3 conceptually depicts this arrangement, using one driving acoustic sensor 311 to induce a vibration using sinusoidal waves into the region of interest, illustrated as object 300, and two receiving acoustic sensors 312, 313 to receive the vibrational response modes after passing through the object 300.

As such, the component 300 is subjected to mechanical vibrations at different frequencies via acoustic sensors that convert electric sinusoidal waves into mechanical waves. The modes and frequency of vibrations in a part depends on its geometry, mechanical rigidity, elastic properties, alloying, heat treatment, and microstructure as shown below equation 1. Resonant frequencies are determined by dimensions and material properties of joined component, accordingly to the following widely-known formula: fᵣ ∼ SQRT(k/m); where fᵣ = resonant frequency; k = stiffness (elastic properties e.g., Young's Modulus); and m = mass (dimensions, density). Structural defect strength reduction caused by degraded material properties or dimensional variation e.g., a crack reduces stiffness and lowers the resonant frequency, which can be observed on the output signal. Further, the driving frequency applied to the object depends on the mass and geometry of the object. In general, objects with relatively higher mass are driven with relatively lower frequencies than relatively lower mass objects.

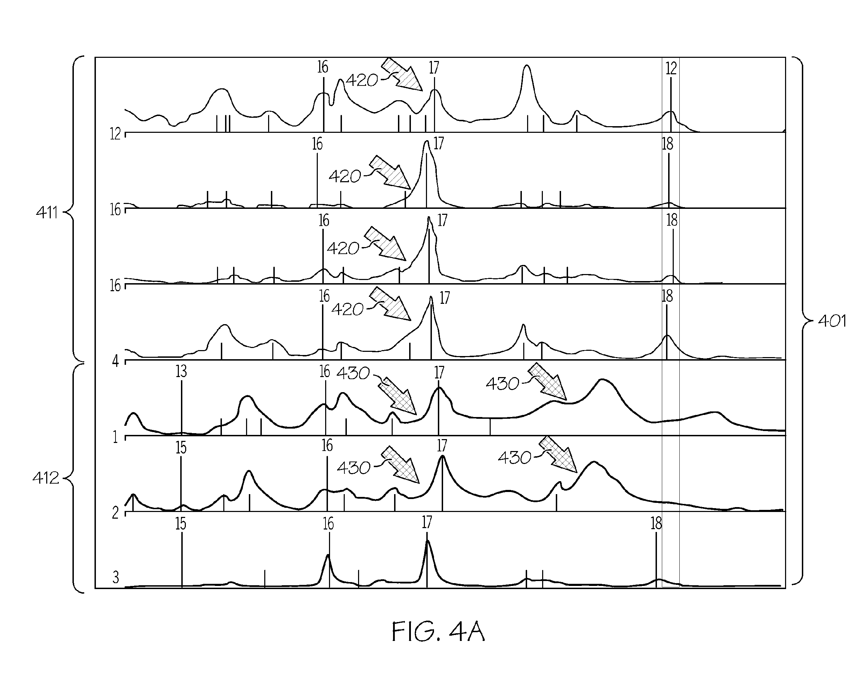

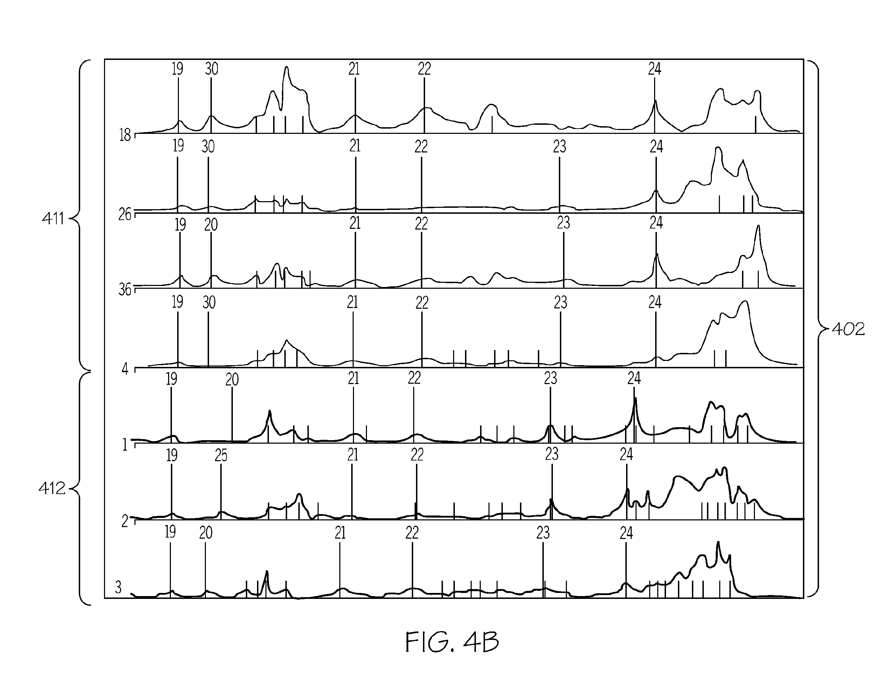

FIG. 4 shows a typical resonance spectrum obtained from two groups of riveted bearing assemblies. The spectrum is presented in two parts. Part 401 shows the frequency range between about 35 kHz and about 90 kHz, whereas part 402 shows the frequency range between about 85 kHz and about 135 kHz. A properly assembled separator component with sufficient clamping between the two halves (exemplified by the four spectra in part 411 of FIG. 4) will show a notably different response spectra than an assembly with improperly installed and headed rivets in which the separator halves are insufficiently clamped (exemplified by the three spectra in part 412). As shown in FIG. 4, the four spectra resulting from tests of properly assembled components exhibit a uniform and sharply defined resonance frequency peak at about 60kHz (indicated by arrows 420), whereas the three spectra resulting from tests of improperly assembled components exhibit a broader peak that is slightly higher in frequency, in addition to a second broad peak at about 75 kHz (both indicated by arrows 430).

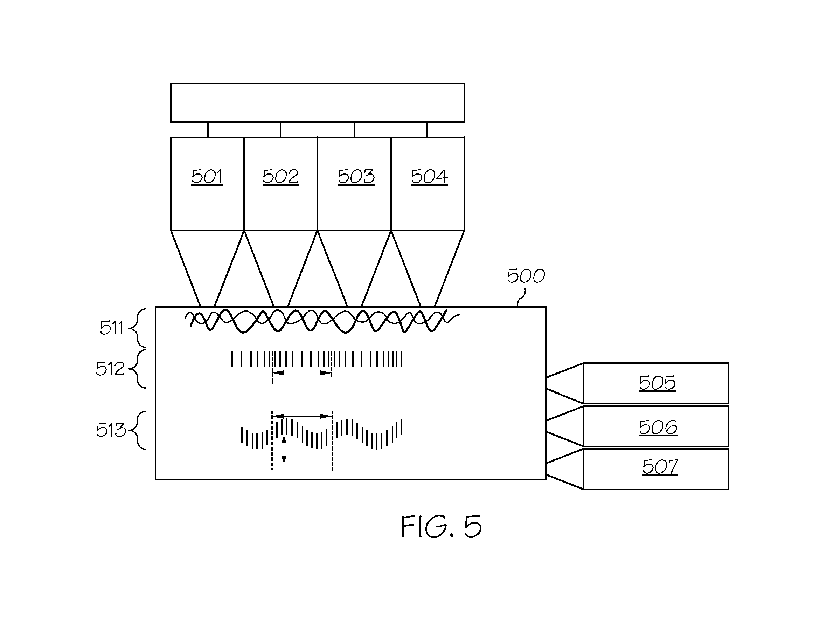

In an embodiment, the plurality of acoustic sensors is deployed on a region of interest for non-destructive evaluation as a phased array of acoustic sensors. In one example, the phased array of acoustic sensors is used for both driving and receiving vibrations/frequencies. In another example, the phased array of acoustic sensors is used for driving the vibration in the region of interest and optical sensors, such as an optical interferometer, are used for receiving the resonance frequencies as they pass through the region of interest. As illustrated in FIG. 5, an array of four acoustic sensors numbered 501 through 504 are provided over a region of interest on an object 500 for receiving resonance frequencies. An additional three acoustic sensors numbered 505 through 507 are provided alongside the object 500 induce a vibration in the object 500. The acoustic sensors 501 through 504, in various configurations, can be provided to receive surface acoustic waves (shown illustratively as waves 511), longitudinal waves (shown illustratively as waves 512), or shear waves (shown illustratively as waves 513), among other types of waves. As such, each of acoustic sensors 501 through 504 in the phased array can be configured to receive different modes of waves. The present disclosure should not be read as limited to any particular number of sensors in the phased array, nor limited to any particular wave mode resonance frequency with regard to the function of such acoustic sensors.

In an alternative embodiment, sensors 501 through 504 are provided as optical sensors. For example, sensors 501 through 504 may be provided as optical interferometers. Using optics, the sensors 501 through 504 are similarly able to determine the resonance frequencies in the object 500, as induced by the sensors 505 through 507, which would again be provided as acoustic sensors. The various modes of waves as noted about are receivable using optical sensors in the same manner as noted above.

As part of this testing, software algorithms are used to characterize the spectral differences, such as "Q", Bandwidth (BW), Peak frequency, center frequency, and 3dB and 6dB BW between known accepted parts and rejected parts. These differences are used to "train" the system to screen hardware based on these good and bad spectra. In this way, parts can be set up for automated inspection.

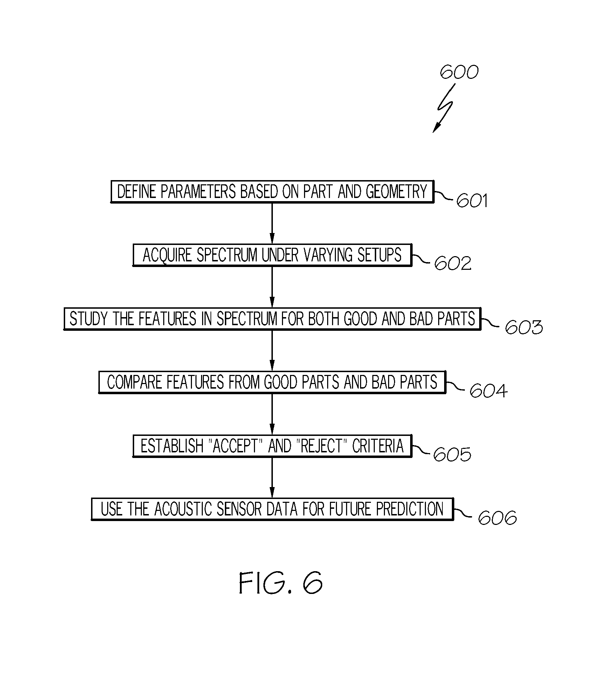

An exemplary method 600 for non-destructive evaluation of machine-riveted bearings is illustrated as a flowchart in FIG. 6. The method 600 begins with a step of defining parameters based on part type and geometry. As will be appreciated, riveted bearings are manufactured in many different shapes and sizes. As such, the method includes a step of defining parameters such as the region of interest, number of acoustic or optical sensors to be used in the phased array, and types of wave forms (modes) to evaluate.

The exemplary method 600 continues with respect to step 602. At step 602, spectra are acquired under the varying setups or parameters defined in step 601. In order to acquire a sufficient sample size of spectra, a plurality of both good parts (i.e., parts with no known defects or anomalies) and bad parts (i.e., parts with known defects or anomalies) are provided. Each of these parts is then tested using each of the setups defined by the previous determined parameters. The result is a number of resonance spectra that can be subjected to further analysis.

As such, the exemplary method 600 continues at step 603 with studying the features in the acquired spectra for both good and bad parts. Here, the differences will be noted between parts that are known to be good and parts that are known to be bad. With reference back to FIG. 4, as previously discussed therein, for example, the good parts of that particular size and type all had sharply defined peaks at about 60 kHz, whereas the bad parts did not, and further had an additional broad peak in the 75 kHz range.

Differences between the spectra of any given part will become apparent to the skilled artisan upon visual or computerized inspection. This comparison, step 604 of method 600, is preferably performed using computerized inspection for both cost and accuracy considerations. Various software programs known in the art may be employed to analyze the spectra, make comparisons, and determine the differences found between the spectra of good parts and the spectra of bad parts.

With reference now to step 605 of method 600, one or more criteria are established for making future determinations as to whether a part will be considered good or bad. The criteria are based on the observed difference in spectra between the known good and bad parts. For example, one criteria may be established as the presence or absence of a certain defined peak on the spectra. If the peak is present, then the part passes this criteria. If the peak is not present, then the part does not pass this criteria, and is rejected.

Finally, with reference to step 606 of method 600, acoustic sensor testing spectral data can be continuously gathered as more parts are tested in the course of performing the present method. The additional data provided can be used to update and refine the criteria, if needed.

In principle, a variety of acoustic sensing technologies may be employed to detect defects in riveted bearings, according to the methods and techniques described above. However, through research and testing, four particular approaches have surprising been found to provide superior results. Each such approach will be addressed in turn, below. The first approach involves the use of acoustic sensors for both the driver and receiver units. It should be noted that a plurality of drivers and receivers may be employed, with the same or different frequencies, to generate second and third order harmonics. The second approach is the use of acoustic sensors for the driver, and optical sensors for the receivers. In the third approach, ultrasonic sensors may be employed, as will be discussed in greater detail below. Finally, in a fourth approach, non-linear acoustics may be employed.

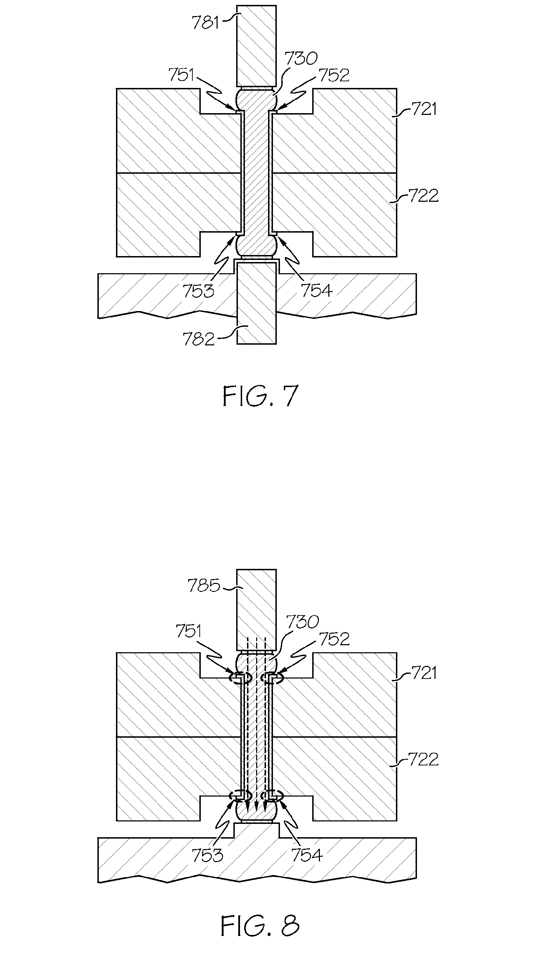

Regarding these four approaches, the previously presented disclosure illustrates the basic outlines of how to perform such a method. Further, FIGS. 7-10 illustrate exemplary embodiments for identifying and testing regions of interest in a riveted bearing. It will be noted that the reference numerals in FIGS. 7-10 have been incremented, with respect to FIG. 1, to have a "7" prefix. As such, rivet 130 from FIG. 1 is represented as rivet 730 in FIGS. 7-10, and so forth. With particular reference now to FIG. 7, four regions of interest 751-754 are identified for testing. These regions correspond with exterior contact points between the separator halves 721, 722 and the rivet 730.

In particular, with regard to FIG. 7, ultrasonic sensors, as will be discussed in greater detail below, have been found beneficial for the approach illustrated therein. A first ultrasonic sensor 781 (driver) is deployed above the rivet 730 as illustrated in FIG. 7, and a second ultrasonic sensor 782 (receiver) is deployed below the rivet 730. As illustrated in FIG. 8, an ultrasonic wave is caused to propagate, from sensor 781, through the interface between the rivet 730 and the separator halves 721, 722, and in particular through the ROIs 751-754. The sensor 782 receives the wave. Analysis thereof can be performed according to the methods described above.

In particular, embodiments of the present disclosure may employ either or both of conventional ultrasonics and phased array ultrasonics. As is known in the art, conventional ultrasonic transducers for NDE commonly include either a single active element that both generates and receives high frequency sound waves, or two paired elements, one for transmitting and one for receiving (T/R). This approach is depicted with reference to FIGS. 7-10. In alternative embodiments, phased array probes, on the other hand, typically consist of a transducer assembly with from 16 to as many as 256 small individual elements that can each be pulsed separately. These may be arranged in a strip (linear array), a ring (annular array), a circular matrix (circular array), or a more complex shape.

Transducer frequencies are most commonly in the range from 2 MHz to 20 MHz. A phased array system will also include a computer-based instrument that is capable of driving the multi-element probe, receiving and digitizing the returning echoes, and plotting that echo information in various standard formats. A phased array system utilizes the wave physics principle of phasing, varying the time between a series of outgoing ultrasonic pulses in such a way that the individual wave fronts generated by each element in the array combine with each other to add or cancel energy in predictable ways that effectively steer and shape the sound beam. This is accomplished by pulsing the individual probe elements at slightly different times. Frequently the elements will be pulsed in groups of 4 to 32 in order to improve effective sensitivity by increasing aperture, which reduces unwanted beam spreading and enables sharper focusing.

Software known as a focal law calculator establishes specific delay times for firing each group of elements in order to generate the desired beam shape, taking into account probe and wedge characteristics as well as the geometry and acoustical properties of the test material. The programmed pulsing sequence selected by the instrument's operating software then launches a number of individual wave fronts in the test material. These wave fronts in turn combine constructively and destructively into a single primary wave front that travels through the test material and reflects off cracks, discontinuities, back walls, and other material boundaries like any conventional ultrasonic wave. The beam can be dynamically steered through various angles, focal distances, and focal spot sizes in such a way that a single probe assembly is capable of examining the test material across a range of different perspectives. This beam steering happens very quickly, so that a scan from multiple angles or with multiple focal depths can be performed in a small fraction of a second.

The returning echoes are received by the various elements or groups of elements and time-shifted as necessary to compensate for varying wedge delays and then summed. For example, a "C-Scan" is a two dimensional presentation of data displayed as a top or planar view of a test piece, similar in its graphic perspective to an x-ray image, where color represents the gated signal amplitude at each point in the test piece mapped to its x-y position. With conventional instruments, the single-element transducer must be moved in an x-y raster scan pattern over the test piece. With phased array systems, the probe is typically moved physically along one axis while the beam electronically scans along the other. Encoders will normally be used whenever precise geometrical correspondence of the scan image to the part must be maintained, although un-encoded manual scans can also provide useful information in many cases.

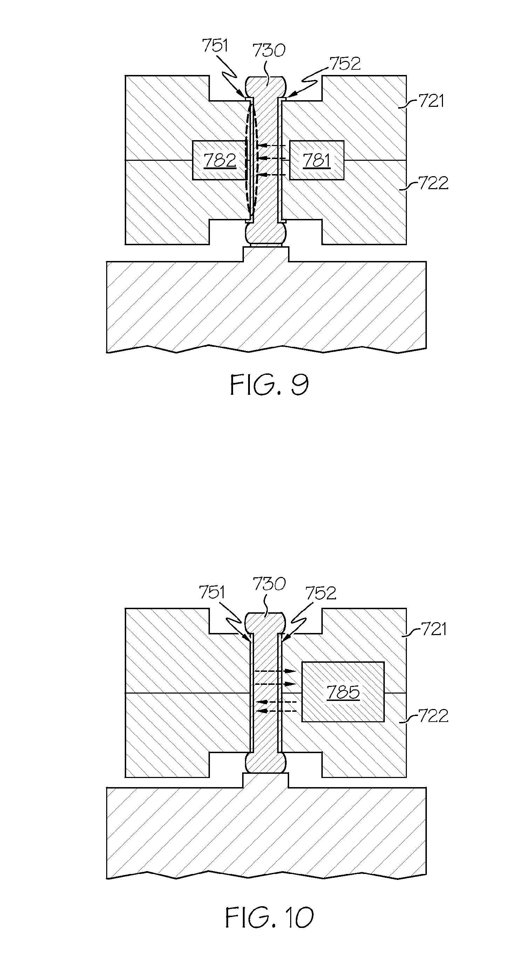

FIG. 9 depicts an alternate embodiment ROI testing scheme. As shown, the ROI 751 is the circles region along the inner interface between the separator halves 721, 722 and the rivet 730. Here, two sensors, for example ultrasonic sensors, are employed, sensor 781 being the driver and sensor 782 being the receiver. FIG. 10 depicts yet another alternate embodiment ROI testing scheme. As shown, a single sensor 781, for example an ultrasonic sensor, acts to both drive and receive the wave, as shown by the arrows therein. Here again, the ROI is the interface between the separator halves 721, 722 and the rivet 730.

As noted above in the fourth approach, in yet a further alternate embodiment, non-linear acoustics may be employed in any of the testing schemes described herein (in addition to the standard acoustics and ultrasonics noted above (approaches 1, 2, and 3)). In this embodiment, scanning the region of interest may be accomplished using a non-linear ultrasonic driver and using several receivers for receiving several multiple harmonics for analyzing structural integrity, and producing a scan image thereby. For non-linear acoustics, additional frequencies are generated by any external discontinuities present in the structure. The NDE approach disclosed herein is based on ASTM E2534 as well as known literature on non-linear acoustics. In an exemplary implementation thereof, a tone burst narrow band is used for vibration and a wideband receiver is used for recording output.

As such, disclosed herein are methods for non-destructive evaluation of machine riveted bearings. Embodiments of the subject matter described herein allow for a wide range of applications in the areas of life assessment in a bearing, manufacturing process monitoring, and quality inspection and reliability. Manufacturing introduced anomalies can be quickly observed and bad parts rejected as need be. Further, the acoustic sensors employed herein are capable of monitoring structural integrity between parts fabricated under varying manufacturing conditions as well as returned from the field.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It is being understood that various changes may be made in the function and arrangement of elements described in an exemplary embodiment without departing from the scope of the invention as set forth in the appended claims.

## Claims

1. A method for non-destructive evaluation of a machine-riveted bearing, comprising:
identifying a region of interest on the machine-riveted bearing;
positioning a plurality of acoustic sensors in the region of interest, the plurality of acoustic sensors being provided in a phased array;
inducing a vibration in the region of interest using the plurality of acoustic sensors and receiving a resonance frequency spectra using the plurality of acoustic sensors; and
comparing the received resonance frequency spectra against a reference spectra to determine the presence of an anomaly in the region of interest.

2. The method of claim 1, wherein identifying a region of interest comprises identifying a riveted region between two separator elements of the machine-riveted bearing.

3. The method of claim 1, wherein inducing a vibration comprises inducing a sinusoidal wave of vibration frequencies.

4. The method of claim 1, wherein receiving a resonance frequency comprises receiving surface acoustic waves.

5. The method of claim 1, wherein receiving a resonance frequency comprises receiving longitudinal waves.

6. The method of claim 1, wherein receiving a resonance frequency comprises receiving shear waves.

7. The method of claim 1, further comprising inducing a vibration in the region of interest of a reference machine-riveted bearing using the plurality of acoustic sensors and receiving a resonance frequency spectra using the plurality of acoustic sensors to produce the reference spectra.

8. A method for non-destructive evaluation of a machine-riveted bearing, comprising:
identifying a region of interest on the machine-riveted bearing;
positioning a plurality of acoustic sensors in the region of interest, the plurality of acoustic sensors being provided in a phased array;
positioning a plurality of optical sensors in the region of interest, the plurality of optical sensors being provided in a phased array;
inducing a vibration in the region of interest using the plurality of acoustic sensors and receiving a resonance frequency spectra using the plurality of optical sensors; and
comparing the received resonance frequency spectra against a reference spectra to determine the presence of an anomaly in the region of interest.

9. The method of claim 8, wherein identifying a region of interest comprises identifying a riveted region between two separator elements of the machine-riveted bearing.

10. The method of claim 8, wherein inducing a vibration comprises inducing a sinusoidal wave of vibration frequencies.
